# EUROPEAN PATENT APPLICATION

(11) **EP 4 674 644 A1**
(43) Date of publication of application: **07.01.2026**
(21) Application number: 23935433.5
(22) Date of filing: 12.10.2023
(51) Int. Cl.: B60C 11/03, B60C 11/00

(54) **PNEUMATIC TIRE**

(30) Priority: 27.04.2023 JP 2023073875
(71) Applicant: BRIDGESTONE CORPORATION, Chuo-ku Tokyo 104-8340 (JP)
(72) Inventor: SUDA, Yuya, Tokyo 104-8340 (JP); KOJIMA, Ryota, Tokyo 104-8340 (JP)
(74) Representative: Marks & Clerk LLP
(86) International application number: PCT/JP2023/037107
(87) International publication number: WO 2024/224660

(57) **Abstract**

A pneumatic tire includes a tread portion with a tread pattern in which a rotation direction is specified. The tread pattern includes, on each of both sides in the tire width direction across the tire equator, a repeated inclined groove group that is repeated in the tire circumferential direction, the repeated inclined groove group including a plurality of inclined grooves. The plurality of inclined grooves of the repeated inclined groove group include a first inclined groove extending across the tire equator, and a second inclined groove extending along the first inclined groove and terminating without crossing the tire equator. An end of the first inclined groove of a one-side repeated inclined groove group, an end of the second inclined groove of the one-side repeated inclined groove group, and an end of the second inclined groove of an other-side repeated inclined groove group are aligned along a straight line.

## Description

### TECHNICAL FIELD

The present disclosure relates to a pneumatic tire.

### BACKGROUND

Conventionally, pneumatic tires provided with a tread pattern including a circumferential groove extending in the tire circumferential direction and an inclined groove extending inclined with respect to the tire circumferential direction are known. A pneumatic tire of this type is described in Patent Literature (PTL) 1. In the pneumatic tire described in PTL 1, two circumferential grooves are formed on both sides in the tire width direction across the tire equatorial plane, and a center rib is defined between these two circumferential grooves. Further, in the pneumatic tire described in PTL 1, an inclined groove extending inclined with respect to the tire circumferential direction is formed on the outer side in the tire width direction of the circumferential groove.

### CITATION LIST

### Patent Literature

PTL 1: JP 2009-101785 A

### SUMMARY

### (Technical Problem)

In the pneumatic tire described in PTL 1, high drainage performance can be ensured by providing two circumferential grooves and inclined grooves. However, in the pneumatic tire described in PTL 1, the rigidity in the tire width direction of the center rib defined between the two circumferential grooves is small, and, for example, during high-speed cornering, there is still room for improvement in terms of gripping performance during cornering.

The present disclosure aims to provide a pneumatic tire capable of achieving both drainage performance and gripping performance during cornering.

### (Solution to Problem)

A pneumatic tire according to a first aspect of the present disclosure is
(1)
   a pneumatic tire comprising a tread portion with a tread pattern in which a rotation direction is specified, wherein
   the tread pattern
      does not have a circumferential groove extending endlessly in the tire circumferential direction, and
      includes, on each of both sides in the tire width direction across the tire equator, a repeated inclined groove group that is repeated in the tire circumferential direction, the repeated inclined groove group including a plurality of inclined grooves arranged at intervals in the tire circumferential direction and inclined so as to extend in a direction opposite to the rotation direction as they extend outward in the tire width direction,
   the plurality of inclined grooves of the repeated inclined groove group include
      a first inclined groove extending across the tire equator, and
      a second inclined groove extending along the first inclined groove and terminating without crossing the tire equator, and
   among the repeated inclined groove groups, a one-side repeated inclined groove group located on one side in the tire width direction, and an other-side repeated inclined groove group located on the other side in the tire width direction, are arranged such that an end of the first inclined groove of the one-side repeated inclined groove group, an end of the second inclined groove of the one-side repeated inclined groove group, and an end of the second inclined groove of the other-side repeated inclined groove group are aligned along a straight line.
   A pneumatic tire according to one embodiment of the present disclosure is
(2)
   the pneumatic tire according to (1) above, wherein, in the repeated inclined groove group, the second inclined groove is arranged at an interval in the rotation direction with respect to the first inclined groove.
   A pneumatic tire according to one embodiment of the present disclosure is
(3)
   the pneumatic tire according to (1) or (2) above, wherein the first inclined groove is, among the plurality of inclined grooves of the repeated inclined groove group, located outermost in the direction opposite to the rotation direction.
   A pneumatic tire according to one embodiment of the present disclosure is
(4)
   the pneumatic tire according to any one of (1) to (3) above, wherein the second inclined groove is, among the plurality of inclined grooves of the repeated inclined groove group, located outermost in the rotation direction.
   A pneumatic tire according to one embodiment of the present disclosure is
(5)
   the pneumatic tire according to any one of (1) to (4) above, wherein the one-side repeated inclined groove group and the other-side repeated inclined groove group are arranged alternating in the tire circumferential direction.
   A pneumatic tire according to one embodiment of the present disclosure is
(6)
   the pneumatic tire according to any one of (1) to (5) above, wherein the plurality of inclined grooves of the repeated inclined groove group include a third inclined groove that is arranged between the first inclined groove and the second inclined groove in the tire circumferential direction and extends alongside the first inclined groove and the second inclined groove, and
   the one-side repeated inclined groove group and the other-side repeated inclined groove group are arranged such that the end of the first inclined groove of the one-side repeated inclined groove group, the end of the second inclined groove of the one-side repeated inclined groove group, an end of the third inclined groove of the one-side repeated inclined groove group, and the end of the second inclined groove of the other-side repeated inclined groove group are aligned along a straight line.
   A pneumatic tire according to one embodiment of the present disclosure is
(7)
   the pneumatic tire according to (6) above, wherein the third inclined groove terminates without crossing the tire equatorial plane.
   A pneumatic tire according to one embodiment of the present disclosure is
(8)
   the pneumatic tire according to (6) or (7) above, wherein the end of the first inclined groove of the one-side repeated inclined groove group, the end of the second inclined groove of the one-side repeated inclined groove group, the end of the third inclined groove of the one-side repeated inclined groove group, and the end of the second inclined groove of the other-side repeated inclined groove group are aligned along a straight line along the extending direction of the portion of the first inclined groove of the other-side repeated inclined groove group that crosses the tire equator.
   A pneumatic tire according to one embodiment of the present disclosure is
(9)
   the pneumatic tire according to any one of (1) to (8) above, wherein the tread pattern includes an auxiliary groove, which has a groove width smaller than each of the inclined grooves of the plurality of inclined grooves of the repeated inclined groove group and is arranged in at least one of between the plurality of inclined grooves of the repeated inclined groove group and between two adjacent repeated inclined groove groups in the tire circumferential direction.
   A pneumatic tire according to one embodiment of the present disclosure is
(10)
   the pneumatic tire according to any one of (1) to (9) above, wherein each of the plurality of inclined grooves of the repeated inclined groove group includes a center-side inclined portion that is located on a center side in the tire width direction and an outer-side inclined portion that is located on an outer side in the tire width direction, the center-side inclined portion having an inclination angle with respect to the tire circumferential direction different from that of the outer-side inclined portion, and
   the inclination angle of the center-side inclined portion with respect to the tire circumferential direction is smaller than the inclination angle of the outer-side inclined portion with respect to the tire circumferential direction.
   A pneumatic tire according to one embodiment of the present disclosure is
(11)
   the pneumatic tire according to (10) above, wherein the inclination angle of the center-side inclined portion with respect to the tire circumferential direction is 30° to 45°, and the inclination angle of the outer-side inclined portion with respect to the tire circumferential direction is greater than 45° and not more than 90°.
   A pneumatic tire according to one embodiment of the present disclosure is
(12)
   the pneumatic tire according to any one of (1) to (11) above, wherein the height in the tire radial direction of a land portion defined between the plurality of inclined grooves of the repeated inclined groove group or between two adjacent repeated inclined groove groups in the tire circumferential direction gradually decreases toward an end of the land portion in the tire circumferential direction.

### (Advantageous Effect)

According to the present disclosure, it is possible to provide a pneumatic tire capable of achieving both drainage performance and gripping performance during cornering.

### BRIEF DESCRIPTION OF THE DRAWINGS

In the accompanying drawings:
FIG. 1: A developed view of the tread portion of a pneumatic tire according to one embodiment of the present disclosure.
FIG. 2: An enlarged view illustrating a part of FIG. 1.
FIG. 3: A cross-sectional view at the position of line I-I in FIG. 2.

Hereinafter, embodiments of a pneumatic tire according to the present disclosure will be illustratively described with reference to the drawings. In each figure, identical components are denoted by the same reference numerals.

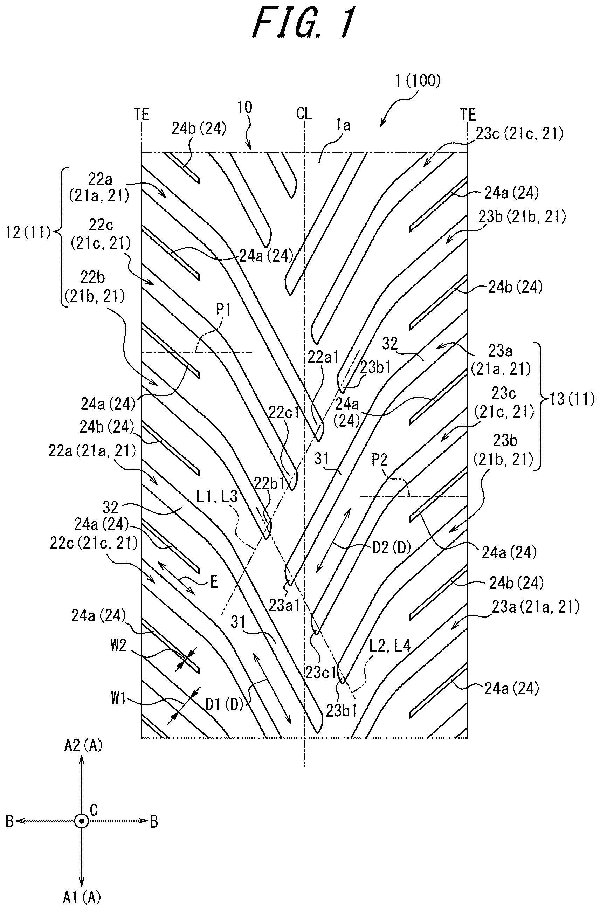

FIG. 1 is a diagram illustrating a pneumatic tire 100 as one embodiment of a pneumatic tire according to the present disclosure. More specifically, FIG. 1 is a developed view of the tread portion 1 of the pneumatic tire 100. Hereinafter, for convenience of explanation, the pneumatic tire 100 may be simply referred to as "tire 100." As illustrated in FIG. 1, the tread surface 1a of the tread portion 1 has a tread pattern 10 in which a rotation direction A1 in the tire circumferential direction A is specified. The rotation direction A1 may be indicated, for example, by an arrow or the like on the sidewall portion.

The application and internal structure of the tire according to the present disclosure are not particularly limited. The tire 100 of the present embodiment is a racing tire, but may also be, for example, a radial tire for a passenger vehicle.

As illustrated in FIG. 1, the tread pattern 10 does not include a circumferential groove extending endlessly in the tire circumferential direction A. Further, as illustrated in FIG. 1, the tread pattern 10 includes, on each of both sides in the tire width direction B across the tire equatorial plane CL, a repeated inclined groove group 11 that is repeatedly arranged in the tire circumferential direction A. Each repeated inclined groove group 11 is arranged at intervals in the tire circumferential direction A and includes a plurality of inclined grooves 21 that are inclined so as to extend in a direction opposite to the rotation direction A1 (i.e., direction A2) as they extend outward in the tire width direction B.

Hereinafter, for convenience of explanation, among the two repeated inclined groove groups 11 arranged on both sides in the tire width direction B, the repeated inclined groove group 11 located on one side in the tire width direction B (the left side in the example of FIG. 1) will be referred to as the "one-side repeated inclined groove group 12." The repeated inclined groove group 11 located on the other side in the tire width direction B (the right side in the example of FIG. 1) will be referred to as the "other-side repeated inclined groove group 13." Furthermore, when not particularly distinguishing between the one-side repeated inclined groove group 12 and the other-side repeated inclined groove group 13, they will simply be referred to as "repeated inclined groove group 11."

The plurality of inclined grooves 21 of the repeated inclined groove group 11 include a first inclined groove 21a and a second inclined groove 21b. The first inclined groove 21a extends across the tire equatorial plane CL. In contrast, the second inclined groove 21b extends along the first inclined groove 21a and terminates without crossing the tire equatorial plane CL. Furthermore, the plurality of inclined grooves 21 of the repeated inclined groove group 11 of the present embodiment include, in addition to the first inclined groove 21a and the second inclined groove 21b, a third inclined groove 21c. More specifically, the plurality of inclined grooves 21 of the repeated inclined groove group 11 of the present embodiment consist of the above-described first inclined groove 21a, second inclined groove 21b, and third inclined groove 21c. The third inclined groove 21c of the present embodiment is arranged between the first inclined groove 21a and the second inclined groove 21b in the tire circumferential direction A and extends alongside the first inclined groove 21a and the second inclined groove 21b. Here, "extends alongside" means that it extends in approximately the same direction, and is not limited to a configuration in which it extends completely parallel. Therefore, for example, even if the relative angle difference in the extending directions of the plurality of inclined grooves is a predetermined angle or less (for example, 10° or less), such a case is also included in the above "extends alongside." Hereinafter, the extending directions of the first inclined groove 21a, the second inclined groove 21b, and the third inclined groove 21c will be referred to as the "extending direction D."

The repeated inclined groove group 11 may be configured to include, as the plurality of inclined grooves 21, only the above-described first inclined groove 21a and second inclined groove 21b. Further, the repeated inclined groove group 11 may include, as the plurality of inclined grooves 21, in addition to the above-described first inclined groove 21a, second inclined groove 21b, and third inclined groove 21c, yet another inclined groove. In this way, the repeated inclined groove group 11 need only include at least the above-described first inclined groove 21a and second inclined groove 21b.

Here, the outer end in the tire width direction B of each of the plurality of inclined grooves 21 of the repeated inclined groove group 11 does not terminate within the tread surface 1a, but rather penetrates the side surface of the tire 100 outside the tread edge TE in the tire width direction B. That is, in a side view of the tire 100 as seen from the outside in the tire width direction B, the open ends of each of the plurality of inclined grooves 21 are in a visible state. In contrast, the inner end in the tire width direction B (center side) of each of the plurality of inclined grooves 21 of the repeated inclined groove group 11 terminates within the tread surface 1a. Hereinafter, for convenience of explanation, unless otherwise specified, the end of each of the plurality of inclined grooves 21 of the repeated inclined groove group 11 that terminates within the tread surface 1a on the center side in the tire width direction B will simply be referred to as the "end of the inclined groove." Further, the "end of the inclined groove" as used herein refers to the portion within 15 mm in the extending direction from the center-side end in the tire width direction B of the inclined groove.

Furthermore, for convenience of explanation, the first inclined groove 21a of the one-side repeated inclined groove group 12 will be distinguished as the "one-side first inclined groove 22a," and the first inclined groove 21a of the other-side repeated inclined groove group 13 will be distinguished as the "other-side first inclined groove 23a." When not particularly distinguishing between the one-side first inclined groove 22a and the other-side first inclined groove 23a, they will simply be referred to as the "first inclined groove 21a."

Further, for convenience of explanation, the second inclined groove 21b of the one-side repeated inclined groove group 12 will be distinguished as the "one-side second inclined groove 22b," and the second inclined groove 21b of the other-side repeated inclined groove group 13 will be distinguished as the "other-side second inclined groove 23b." When not particularly distinguishing between the one-side second inclined groove 22b and the other-side second inclined groove 23b, they will simply be referred to as the "second inclined groove 21b."

Furthermore, for convenience of explanation, the third inclined groove 21c of the one-side repeated inclined groove group 12 will be distinguished as the "one-side third inclined groove 22c," and the third inclined groove 21c of the other-side repeated inclined groove group 13 will be distinguished as the "other-side third inclined groove 23c." When not particularly distinguishing between the one-side third inclined groove 22c and the other-side third inclined groove 23c, they will simply be referred to as the "third inclined groove 21c."

As illustrated in FIG. 1, in the developed view of the tread portion 1, the one-side repeated inclined groove group 12 and the other-side repeated inclined groove group 13 are arranged such that the end 22a1 of the one-side first inclined groove 22a of the one-side repeated inclined groove group 12, the end 22b1 of the one-side second inclined groove 22b of the one-side repeated inclined groove group 12, and the end 23b1 of the other-side second inclined groove 23b of the other-side repeated inclined groove group 13 are aligned along a straight line. Here, "aligned along a straight line" for the above three ends 22a1, 22b1, and 23b1 means that, in the developed view of the tread portion 1 (see FIG. 1), there exists at least one virtual straight line L1 passing through the above three ends 22a1, 22b1, and 23b1. As illustrated in FIG. 1, the virtual straight line L1 of the present embodiment is a straight line extending inclined with respect to the tire circumferential direction A. In this way, by arranging the one-side repeated inclined groove group 12 and the other-side repeated inclined groove group 13 such that the above three ends 22a1, 22b1, and 23b1 are aligned along a straight line, even in a configuration in which the tread pattern 10 does not include a circumferential groove extending endlessly in the tire circumferential direction A, it is possible to suppress a decrease in rigidity in the central portion in the tire width direction B and to suppress a decrease in drainage performance. That is, even in a configuration in which the tread pattern 10 does not include a circumferential groove extending endlessly in the tire circumferential direction A, both drainage performance and gripping performance during cornering can be achieved.

Furthermore, as illustrated in FIG. 1, in the developed view of the tread portion 1, the one-side repeated inclined groove group 12 and the other-side repeated inclined groove group 13 are arranged such that the end 23a1 of the other-side first inclined groove 23a of the other-side repeated inclined groove group 13, the end 23b1 of the other-side second inclined groove 23b of the other-side repeated inclined groove group 13, and the end 22b1 of the one-side second inclined groove 22b of the one-side repeated inclined groove group 12 are aligned along a straight line. Here, "aligned along a straight line" for the above three ends 23a1, 23b1, and 22b1 means that, in the developed view of the tread portion 1 (see FIG. 1), there exists at least one virtual straight line L2 passing through the above three ends 23a1, 23b1, and 22b1. As illustrated in FIG. 1, the virtual straight line L2 of the present embodiment is a straight line extending inclined with respect to the tire circumferential direction A on the opposite side to the above-described virtual straight line L1. In this way, by arranging the one-side repeated inclined groove group 12 and the other-side repeated inclined groove group 13 such that the above three ends 23a1, 23b1, and 22b1 are aligned along a straight line, even in a configuration in which the tread pattern 10 does not include a circumferential groove extending endlessly in the tire circumferential direction A, it is possible to suppress a decrease in rigidity in the central portion in the tire width direction B and to suppress a decrease in drainage performance. That is, even in a configuration in which the tread pattern 10 does not include a circumferential groove extending endlessly in the tire circumferential direction A, both drainage performance and gripping performance during cornering can be achieved.

In particular, it is preferable that the one-side repeated inclined groove group 12 and the other-side repeated inclined groove group 13 are arranged such that both of the above-described virtual straight lines L1 and L2 exist. By doing so, compared to a configuration in which only one of the virtual straight lines L1 or L2 exists, even in a configuration in which the tread pattern 10 does not include a circumferential groove extending endlessly in the tire circumferential direction A, drainage performance and gripping performance during cornering can be further improved.

Further, when a conventional tire in which a center rib extending endlessly in the tire circumferential direction is arranged at the position of the tire equatorial plane is used as a racing tire, if a large lateral force is applied to the center rib during driving on a drying road surface, damage may occur in which the end in the tire width direction of the outer surface of the center rib is turned up. In contrast, the tire 100 of the present embodiment does not include a circumferential groove extending endlessly in the tire circumferential direction A and does not have the above-described endless center rib. Therefore, even when the tire 100 of the present embodiment is used as a racing tire, the above-described damage in which the center rib is turned up is unlikely to occur.

Hereinafter, from the viewpoint of achieving both the above-described drainage performance and gripping performance during cornering, more preferable configuration examples will be illustratively described.

As illustrated in FIG. 1, in the repeated inclined groove group 11 of the present embodiment, the second inclined groove 21b is arranged at an interval in the rotation direction A1 with respect to the first inclined groove 21a.

Further, as illustrated in FIG. 1, the first inclined groove 21a of the present embodiment is, among the plurality of inclined grooves 21 of the repeated inclined groove group 11, located outermost in the direction opposite to the rotation direction A1 (i.e., direction A2).

Furthermore, as illustrated in FIG. 1, the second inclined groove 21b of the present embodiment is, among the plurality of inclined grooves 21 of the repeated inclined groove group 11, located outermost in the rotation direction A1.

In addition, the one-side repeated inclined groove group 12 and the other-side repeated inclined groove group 13 are arranged alternately in the tire circumferential direction A. More specifically, the intermediate position P1 of the extending region in the tire circumferential direction A of the one-side repeated inclined groove group 12 and the intermediate position P2 of the extending region in the tire circumferential direction A of the other-side repeated inclined groove group 13 appear alternately along one direction in the tire circumferential direction A (the rotation direction A1 or the opposite direction A2), such that the one-side repeated inclined groove group 12 and the other-side repeated inclined groove group 13 are arranged.

As described above, the plurality of inclined grooves 21 of the repeated inclined groove group 11 of the present embodiment include, in addition to the above-described first inclined groove 21a and second inclined groove 21b, a third inclined groove 21c. As described above, the third inclined groove 21c is arranged between the first inclined groove 21a and the second inclined groove 21b in the tire circumferential direction A and extends alongside the first inclined groove 21a and the second inclined groove 21b.

As illustrated in FIG. 1, in the present embodiment, the one-side repeated inclined groove group 12 and the other-side repeated inclined groove group 13 are arranged such that the end 22a1 of the one-side first inclined groove 22a, the end 22b1 of the one-side second inclined groove 22b, the end 22c1 of the one-side third inclined groove 22c, and the end 23b1 of the other-side second inclined groove 23b are aligned along a straight line. That is, in the present embodiment, in the developed view of the tread portion 1 (see FIG. 1), there exists at least one virtual straight line L3 passing through the above four ends 22a1, 22b1, 22c1, and 23b1. As illustrated in FIG. 1, the virtual straight line L3 of the present embodiment is a straight line extending inclined with respect to the tire circumferential direction A. In FIG. 1, an example is illustrated in which the virtual straight line L3 coincides with the above-described virtual straight line L1, but the virtual straight lines L1 and L3 may be separate virtual straight lines that do not coincide.

Further, as illustrated in FIG. 1, in the present embodiment, the one-side repeated inclined groove group 12 and the other-side repeated inclined groove group 13 are arranged such that the end 23a1 of the other-side first inclined groove 23a, the end 23b1 of the other-side second inclined groove 23b, the end 23c1 of the other-side third inclined groove 23c, and the end 22b1 of the one-side second inclined groove 22b are aligned along a straight line. That is, in the present embodiment, in the developed view of the tread portion 1 (see FIG. 1), there exists at least one virtual straight line L4 passing through the above four ends 23al, 23b1, 23c1, and 22b1. As illustrated in FIG. 1, the virtual straight line L4 of the present embodiment is a straight line extending inclined with respect to the tire circumferential direction A on the opposite side to the above-described virtual straight line L3. In FIG. 1, an example is illustrated in which the virtual straight line L4 coincides with the above-described virtual straight line L2, but the virtual straight lines L2 and L4 may be separate virtual straight lines that do not coincide.

In particular, it is preferable that the one-side repeated inclined groove group 12 and the other-side repeated inclined groove group 13 are arranged such that both of the above-described virtual straight lines L3 and L4 exist. By doing so, compared to a configuration in which only one of the virtual straight lines L3 or L4 exists, even in a configuration in which the tread pattern 10 does not include a circumferential groove extending endlessly in the tire circumferential direction A, drainage performance and gripping performance during cornering can be further improved.

As illustrated in FIG. 1, the third inclined groove 21c of the present embodiment, like the second inclined groove 21b, terminates without crossing the tire equatorial plane CL. However, as illustrated in FIG. 1, the third inclined groove 21c terminates at a position closer to the tire equatorial plane CL in the tire width direction B compared to the second inclined groove 21b.

More specifically, the center-side end in the tire width direction B of the one-side third inclined groove 22c of the one-side repeated inclined groove group 12 of the present embodiment, like the one-side second inclined groove 22b, terminates on the one side in the tire width direction B (the left side in the example of FIG. 1) across the tire equatorial plane CL. However, the one-side third inclined groove 22c terminates at a position closer to the tire equatorial plane CL in the tire width direction B compared to the one-side second inclined groove 22b.

Further, the center-side end in the tire width direction B of the other-side third inclined groove 23c of the other-side repeated inclined groove group 13 of the present embodiment, like the other-side second inclined groove 23b, terminates on the other side in the tire width direction B (the right side in the example of FIG. 1) across the tire equatorial plane CL. However, the other-side third inclined groove 23c terminates at a position closer to the tire equatorial plane CL in the tire width direction B compared to the other-side second inclined groove 23b.

Furthermore, as illustrated in FIG. 1, the end 22a1 of the one-side first inclined groove 22a, the end 22b1 of the one-side second inclined groove 22b, and the end 23b1 of the other-side second inclined groove 23b are aligned along the extending direction D2 of the portion of the other-side first inclined groove 23a that crosses the tire equatorial plane CL. In other words, the above-described virtual straight line L1 illustrated in FIG. 1 extends along the extending direction D2 of the portion of the other-side first inclined groove 23a that crosses the tire equatorial plane CL. Here, the "portion of the other-side first inclined groove 23a that crosses the tire equatorial plane CL" in the present embodiment refers to the center-side inclined portion 31, which will be described later, of the other-side first inclined groove 23a.

Furthermore, as illustrated in FIG. 1, the end 22a1 of the one-side first inclined groove 22a, the end 22b1 of the one-side second inclined groove 22b, the end 22c1 of the one-side third inclined groove 22c, and the end 23b1 of the other-side second inclined groove 23b are arranged in a straight line along the extending direction D2 of the portion of the other-side first inclined groove 23a that crosses the tire equatorial plane CL. In other words, the above-described virtual straight line L3 illustrated in FIG. 1 extends along the extending direction D2 of the portion of the other-side first inclined groove 23a that crosses the tire equatorial plane CL, that is, in the present embodiment, the center-side inclined portion 31 of the other-side first inclined groove 23a, which will be described later.

Further, as illustrated in FIG. 1, the end 23a1 of the other-side first inclined groove 23a, the end 23b1 of the other-side second inclined groove 23b, and the end 22b1 of the one-side second inclined groove 22b are arranged in a straight line along the extending direction D1 of the portion of the one-side first inclined groove 22a that crosses the tire equatorial plane CL. In other words, the above-described virtual straight line L2 illustrated in FIG. 1 extends along the extending direction D1 of the portion of the one-side first inclined groove 22a that crosses the tire equatorial plane CL. Here, the "portion of the one-side first inclined groove 22a that crosses the tire equatorial plane CL" in the present embodiment refers to the center-side inclined portion 31 of the one-side first inclined groove 22a, which will be described later.

Furthermore, as illustrated in FIG. 1, the end 23a1 of the other-side first inclined groove 23a, the end 23b1 of the other-side second inclined groove 23b, the end 23c1 of the other-side third inclined groove 23c, and the end 22b1 of the one-side second inclined groove 22b are arranged in a straight line along the extending direction D1 of the portion of the one-side first inclined groove 22a that crosses the tire equatorial plane CL. In other words, the above-described virtual straight line L4 illustrated in FIG. 1 extends along the extending direction D1 of the portion of the one-side first inclined groove 22a that crosses the tire equatorial plane CL, that is, in the present embodiment, the center-side inclined portion 31 of the one-side first inclined groove 22a, which will be described later.

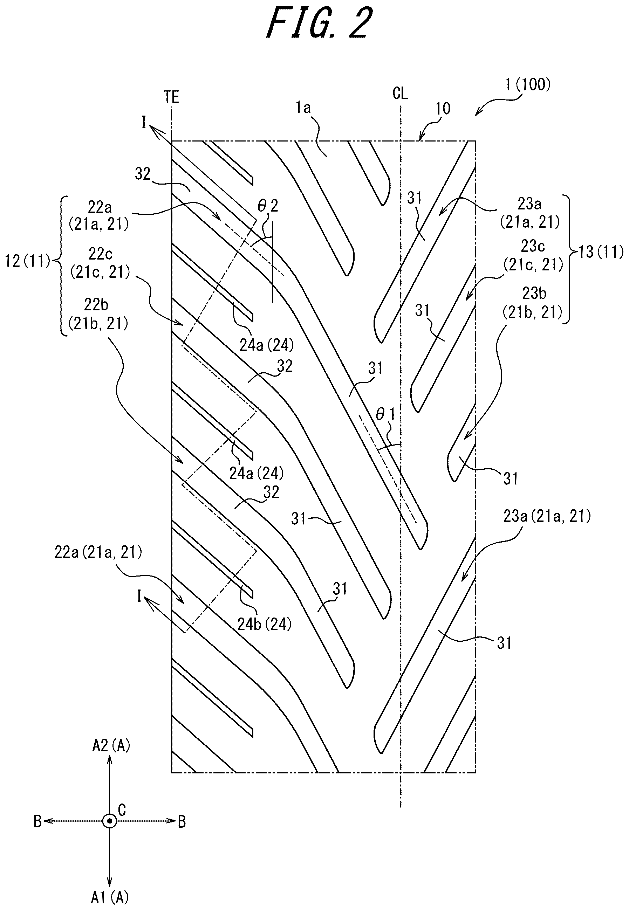

Next, with reference to FIG. 2, the details of each of the plurality of inclined grooves 21 of the repeated inclined groove group 11 of the present embodiment will be described. FIG. 2 is an enlarged view illustrating a part of FIG. 1. Hereinafter, for illustrative purposes, the one-side repeated inclined groove group 12 as the repeated inclined groove group 11 will be described as an example, but the same applies to the other-side repeated inclined groove group 13. As illustrated in FIG. 2, each of the plurality of inclined grooves 21 of the repeated inclined groove group 11 of the present embodiment includes a center-side inclined portion 31 and an outer-side inclined portion 32. The inclination angles of the center-side inclined portion 31 and the outer-side inclined portion 32 with respect to the tire circumferential direction A are different. The center-side inclined portion 31 is located on the center side in the tire width direction B with respect to the outer-side inclined portion 32. Conversely, the outer-side inclined portion 32 is located on the outer side in the tire width direction B with respect to the center-side inclined portion 31. As illustrated in FIG. 2, the center-side inclined portion 31 and the outer-side inclined portion 32 of the present embodiment are connected to form a single inclined groove 21. The center-side inclined portion 31 includes the end on the center side in the tire width direction B of the inclined groove 21. The outer-side inclined portion 32 includes the open end that opens to the side surface of the tire 100 of the inclined groove 21. The inclination angle θ1 of the center-side inclined portion 31 with respect to the tire circumferential direction A is smaller than the inclination angle θ2 of the outer-side inclined portion 32 with respect to the tire circumferential direction A. The inclination angle θ1 of the center-side inclined portion 31 with respect to the tire circumferential direction A is preferably 20 to 40°, more preferably 30 to 40°, and particularly preferably 30 to 35°. In contrast, the inclination angle θ2 of the outer-side inclined portion 32 with respect to the tire circumferential direction A is preferably 45 to 90°, more preferably 50 to 80°, and particularly preferably 50 to 60°.

As illustrated in FIG. 2, in the first inclined groove 21a of the repeated inclined groove group 11, the length in the extending direction D of the center-side inclined portion 31 is longer than the length in the extending direction D of the outer-side inclined portion 32.

Further, as illustrated in FIG. 2, in the second inclined groove 21b of the repeated inclined groove group 11, the length in the extending direction D of the center-side inclined portion 31 is shorter than the length in the extending direction D of the outer-side inclined portion 32.

Furthermore, as illustrated in FIG. 2, in the third inclined groove 21c of the repeated inclined groove group 11, the length in the extending direction D of the center-side inclined portion 31 is longer than the length in the extending direction D of the outer-side inclined portion 32.

Furthermore, as illustrated in FIG. 2, in the repeated inclined groove group 11, the end on the center side in the tire width direction B of the outer-side inclined portion 32 of the first inclined groove 21a, the end on the center side in the tire width direction B of the outer-side inclined portion 32 of the second inclined groove 21b, and the end on the center side in the tire width direction B of the outer-side inclined portion 32 of the third inclined groove 21c are arranged at substantially the same position in the tire width direction B. That is, in the repeated inclined groove group 11, the outer-side inclined portions 32 of the first inclined groove 21a, the second inclined groove 21b, and the third inclined groove 21c are arranged at substantially the same position in the tire width direction B, with substantially equal lengths in the extending direction D.

In the tread surface 1a of the tire 100 of the present embodiment, the region between both tread edges TE on both sides in the tire width direction B is divided into four, with the region of 1/2 in the tire width direction B including the tire equatorial plane CL defined as the center region, and the regions of 1/4 on both sides in the tire width direction B defined as the shoulder regions. In this case, the outer-side inclined portion 32 of the present embodiment is arranged only in the shoulder region.

Further, as illustrated in FIG. 1, the tread pattern 10 of the present embodiment, in addition to the above-described repeated inclined groove group 11, includes an auxiliary groove 24 having a groove width W2 smaller than the groove width W1 of each of the plurality of inclined grooves 21 of the repeated inclined groove group 11. More specifically, the maximum value of the groove width W2 of the auxiliary groove 24 is smaller than the minimum value of the groove width W1 of each of the plurality of inclined grooves 21 of the repeated inclined groove group 11. Here, the groove width W1 of each of the plurality of inclined grooves 21 of the repeated inclined groove group 11 refers to the length of each inclined groove 21 in the direction orthogonal to the extending direction D at any position in the extending direction D of each inclined groove 21. The groove width W2 of the auxiliary groove 24 refers to the length of the auxiliary groove 24 in the direction orthogonal to the extending direction E at any position in the extending direction E of the auxiliary groove 24.

As illustrated in FIG. 1, the auxiliary groove 24 of the present embodiment is arranged between the plurality of inclined grooves 21 of the repeated inclined groove group 11. Furthermore, the auxiliary groove 24 of the present embodiment is arranged between two repeated inclined groove groups 11 that are adjacent in the tire circumferential direction A. Hereinafter, for convenience of explanation, the auxiliary groove 24 arranged between the plurality of inclined grooves 21 of the repeated inclined groove group 11 will be referred to as the "first auxiliary groove 24a." The auxiliary groove 24 arranged between two repeated inclined groove groups 11 that are adjacent in the tire circumferential direction A will be referred to as the "second auxiliary groove 24b." When the first auxiliary groove 24a and the second auxiliary groove 24b are not particularly distinguished, they will simply be referred to as the "auxiliary groove 24."

As illustrated in FIG. 1, the first auxiliary groove 24a of the present embodiment is arranged between the three inclined grooves 21 of each repeated inclined groove group 11. More specifically, the tread pattern 10 of the present embodiment includes, in the tire circumferential direction A, a first auxiliary groove 24a positioned between the first inclined groove 21a and the third inclined groove 21c of each repeated inclined groove group 11. Further, the tread pattern 10 of the present embodiment includes, in the tire circumferential direction A, a first auxiliary groove 24a positioned between the second inclined groove 21b and the third inclined groove 21c of each repeated inclined groove group 11. More specifically, in any repeated inclined groove group 11 of the tread pattern 10 of the present embodiment, a first auxiliary groove 24a is provided between the first inclined groove 21a and the third inclined groove 21c, and between the second inclined groove 21b and the third inclined groove 21c, respectively.

Further, the second auxiliary groove 24b of the present embodiment is arranged between the first inclined groove 21a of one of two repeated inclined groove groups 11 that are adjacent in the tire circumferential direction A and the second inclined groove 21b of the other repeated inclined groove group 11. More specifically, in the tread pattern 10 of the present embodiment, a second auxiliary groove 24b is provided between the first inclined groove 21a of one of any two repeated inclined groove groups 11 that are adjacent in the tire circumferential direction A and the second inclined groove 21b of the other.

Here, the auxiliary groove 24 of the present embodiment extends along the first to third inclined grooves 21a to 21c of the repeated inclined groove group 11. More specifically, the auxiliary groove 24 of the present embodiment is arranged, in the tire width direction B, at a position between the outer-side inclined portions 32 of the first to third inclined grooves 21a to 21c of the repeated inclined groove group 11 in the tire circumferential direction A. The auxiliary groove 24 of the present embodiment extends inclined with respect to the tire circumferential direction A along the outer-side inclined portion 32. The center side in the tire width direction B of the auxiliary groove 24 terminates within the range in the tire width direction B where the outer-side inclined portion 32 is provided. In other words, in the present embodiment, the auxiliary groove 24 is not arranged, in the tire circumferential direction A, at a position in the tire width direction B between the center-side inclined portions 31 of the first to third inclined grooves 21a to 21c of the repeated inclined groove group 11. The outer side in the tire width direction B of the auxiliary groove 24 penetrates through to the side surface of the tire 100.

In the present embodiment, regardless of the arrangement position in the tire circumferential direction A, the position in the tire width direction B, the inclination angle with respect to the tire circumferential direction A, and the length in the extending direction E of the auxiliary groove 24 are substantially equal, but the configuration is not limited thereto. The auxiliary groove 24 may have at least one of the position in the tire width direction B, the inclination angle with respect to the tire circumferential direction A, and the length in the extending direction E different depending on, for example, the arrangement position in the tire circumferential direction A, according to the desired drainage performance.

Further, as described above, in the tread pattern 10 of the present embodiment, a first auxiliary groove 24a is provided between the first inclined groove 21a and the third inclined groove 21c, and between the second inclined groove 21b and the third inclined groove 21c, in any repeated inclined groove group 11, but the configuration is not limited thereto. The first auxiliary groove 24a may be provided only in some of the repeated inclined groove groups 11, for example. However, from the viewpoint of improving drainage performance, it is preferable that the tread pattern 10 includes the first auxiliary groove 24a in any repeated inclined groove group 11.

Furthermore, as described above, in the tread pattern 10 of the present embodiment, a second auxiliary groove 24b is provided between the first inclined groove 21a of one of any two repeated inclined groove groups 11 that are adjacent in the tire circumferential direction A and the second inclined groove 21b of the other, but the configuration is not limited thereto. The second auxiliary groove 24b may be provided only between some of the two adjacent repeated inclined groove groups 11, for example. However, from the viewpoint of improving drainage performance, it is preferable that the tread pattern 10 includes the second auxiliary groove 24b between any two repeated inclined groove groups 11 that are adjacent in the tire circumferential direction A.

Furthermore, the tread pattern 10 of the present embodiment includes the first auxiliary groove 24a and the second auxiliary groove 24b as the auxiliary groove 24, but the configuration is not limited thereto. The tread pattern 10 may not include the first auxiliary groove 24a and the second auxiliary groove 24b, or may include only at least one of the first auxiliary groove 24a and the second auxiliary groove 24b. However, from the viewpoint of improving drainage performance, it is preferable that the tread pattern 10 includes both the first auxiliary groove 24a and the second auxiliary groove 24b.

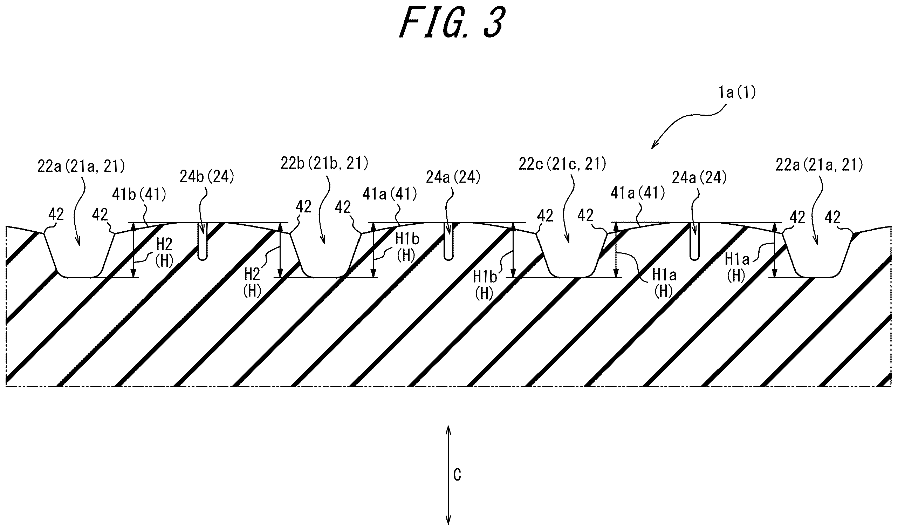

FIG. 3 is a cross-sectional view at the position of line I-I in FIG. 2. As illustrated in FIG. 3, rib-shaped land portions 41 are partitioned between the plurality of inclined grooves 21 of the repeated inclined groove group 11 on the tread surface 1a. Further, as illustrated in FIG. 3, rib-shaped land portions 41 are formed between two repeated inclined groove groups 11 that are adjacent in the tire circumferential direction A on the tread surface 1a. Hereinafter, for convenience of explanation, the land portion 41 partitioned between the plurality of inclined grooves 21 of the repeated inclined groove group 11 will be referred to as the "first land portion 41a." The land portion 41 partitioned between two repeated inclined groove groups 11 that are adjacent in the tire circumferential direction A will be referred to as the "second land portion 41b." When the first land portion 41a and the second land portion 41b are not particularly distinguished, they will simply be referred to as the "land portion 41."

The first land portion 41a of the present embodiment is partitioned between the first inclined groove 21a and the third inclined groove 21c in each repeated inclined groove group 11. Further, the first land portion 41a of the present embodiment is partitioned between the second inclined groove 21b and the third inclined groove 21c in each repeated inclined groove group 11. The above-described first auxiliary groove 24a is formed in the first land portion 41a.

The second land portion 41b of the present embodiment is partitioned between the first inclined groove 21a of one of two repeated inclined groove groups 11 that are adjacent in the tire circumferential direction A and the second inclined groove 21b of the other repeated inclined groove group 11. The above-described second auxiliary groove 24b is formed in the second land portion 41b.

As illustrated in FIG. 3, the height H in the tire radial direction C of the land portion 41 gradually decreases toward the land portion end 42 in the tire circumferential direction A. Here, the land portion end 42 refers to the edge of the inclined groove 21 on both sides in the tire circumferential direction A that partitions the land portion 41.

More specifically, in the case of the first land portion 41a partitioned between the first inclined groove 21a and the third inclined groove 21c in each repeated inclined groove group 11, the height H1a of the first land portion 41a gradually decreases toward the edge of the first inclined groove 21a as the land portion end 42 of the first land portion 41a. Further, the height H1a of the first land portion 41a gradually decreases toward the edge of the third inclined groove 21c as the land portion end 42 of the first land portion 41a.

In the case of the first land portion 41a partitioned between the second inclined groove 21b and the third inclined groove 21c in each repeated inclined groove group 11, the height H1b of the first land portion 41a gradually decreases toward the edge of the second inclined groove 21b as the land portion end 42 of the first land portion 41a. Further, the height H1b of the first land portion 41a gradually decreases toward the edge of the third inclined groove 21c as the land portion end 42 of the first land portion 41a.

In the case of the second land portion 41b partitioned between two repeated inclined groove groups 11 that are adjacent in the tire circumferential direction A, the height H2 of the second land portion 41b gradually decreases toward the edge of the first inclined groove 21a as the land portion end 42 of the second land portion 41b. Further, the height H2 of the second land portion 41b gradually decreases toward the edge of the second inclined groove 21b as the land portion end 42 of the second land portion 41b.

In this way, by having the height H in the tire radial direction C of the land portion 41 gradually decrease toward the land portion end 42 in the tire circumferential direction A, the land portion 41 can be reliably brought into contact with the road surface. The height H in the tire radial direction C of the land portion 41 is maximum at the center in the width direction of the land portion 41. The width direction of the land portion 41 refers to the length of the land portion 41 in the direction orthogonal to the extending direction D of the two inclined grooves 21 that are adjacent in the tire circumferential direction A and partition the land portion 41. The height H in the tire radial direction C of the land portion 41 may be maximum in a predetermined region in the width direction of the land portion 41 including the center in the width direction of the land portion 41. That is, the land portion 41 may include a top surface where the height H in the tire radial direction C is constant.

The pneumatic tire according to the present disclosure is not limited to the specific configuration illustrated in the above-described embodiment, and various modifications, changes, and combinations are possible without departing from the scope of the claims.

### [Contribution to the Sustainable Development Goals (SDGs) led by the United Nations]

The SDGs have been advocated for the realization of a sustainable society. One embodiment of the present disclosure is considered to be a technology that can contribute to, for example, "No. 12 Responsible Consumption and Production" and "No. 13 Climate Action."

### INDUSTRIAL APPLICABILITY

The present disclosure relates to a pneumatic tire.

### REFERENCE SIGNS LIST

1: tread portion, 1a: tread surface, 10: tread pattern, 11: repeated inclined groove group, 12: one-side repeated inclined groove group, 13: other-side repeated inclined groove group, 21: inclined groove, 21a: first inclined groove, 21b: second inclined groove, 21c: third inclined groove, 22a: first inclined groove of the one-side repeated inclined groove group, 22a1: end of the first inclined groove of the one-side repeated inclined groove group, 22b: second inclined groove of the one-side repeated inclined groove group, 22b1: end of the second inclined groove of the one-side repeated inclined groove group, 22c: third inclined groove of the one-side repeated inclined groove group, 22c1: end of the third inclined groove of the one-side repeated inclined groove group, 23a: first inclined groove of the other-side repeated inclined groove group, 23a1: end of the first inclined groove of the other-side repeated inclined groove group, 23b: second inclined groove of the other-side repeated inclined groove group, 23b1: end of the second inclined groove of the other-side repeated inclined groove group, 23c: third inclined groove of the other-side repeated inclined groove group, 23c1: end of the third inclined groove of the other-side repeated inclined groove group, 24: auxiliary groove, 24a: first auxiliary groove, 24b: second auxiliary groove, 31: center-side inclined portion, 32: outer-side inclined portion, 41: land portion, 41a: first land portion, 41b: second land portion, 42: land portion edge, 100: pneumatic tire, A: tire circumferential direction, A1: rotation direction, A2: direction opposite to the rotation direction, B: tire width direction, C: tire radial direction, D: extending direction of the inclined groove of the repeated inclined groove group, D1: extending direction of the center-side inclined portion of the inclined groove of the one-side repeated inclined groove group, D2: extending direction of the center-side inclined portion of the inclined groove of the other-side repeated inclined groove group, E: extending direction of the auxiliary groove, H: height in the tire radial direction of the land portion, H1a, H1b: height in the tire radial direction of the first land portion, H2: height in the tire radial direction of the second land portion, L1 to L4: virtual straight line, P1: intermediate position of the extending region in the tire circumferential direction of the one-side repeated inclined groove group, P2: intermediate position of the extending region in the tire circumferential direction of the other-side repeated inclined groove group, W1: groove width of the inclined groove of the repeated inclined groove group, W2: groove width of the auxiliary groove, CL: tire equator, TE: tread edge, θ1: inclination angle of the center-side inclined portion with respect to the tire circumferential direction, θ2: inclination angle of the outer-side inclined portion with respect to the tire circumferential direction.

## Claims

1. A pneumatic tire comprising a tread portion with a tread pattern in which a rotation direction is specified, wherein
the tread pattern
does not have a circumferential groove extending endlessly in the tire circumferential direction, and
includes, on each of both sides in the tire width direction across the tire equator, a repeated inclined groove group that is repeated in the tire circumferential direction, the repeated inclined groove group including a plurality of inclined grooves arranged at intervals in the tire circumferential direction and inclined so as to extend in a direction opposite to the rotation direction as they extend outward in the tire width direction,
the plurality of inclined grooves of the repeated inclined groove group include
a first inclined groove extending across the tire equator, and
a second inclined groove extending along the first inclined groove and terminating without crossing the tire equator, and
among the repeated inclined groove groups, a one-side repeated inclined groove group located on one side in the tire width direction, and an other-side repeated inclined groove group located on the other side in the tire width direction, are arranged such that an end of the first inclined groove of the one-side repeated inclined groove group, an end of the second inclined groove of the one-side repeated inclined groove group, and an end of the second inclined groove of the other-side repeated inclined groove group are aligned along a straight line.

2. The pneumatic tire according to claim 1, wherein, in the repeated inclined groove group, the second inclined groove is arranged at an interval in the rotation direction with respect to the first inclined groove.

3. The pneumatic tire according to claim 1 or 2, wherein the first inclined groove is, among the plurality of inclined grooves of the repeated inclined groove group, located outermost in the direction opposite to the rotation direction.

4. The pneumatic tire according to claim 1 or 2, wherein the second inclined groove is, among the plurality of inclined grooves of the repeated inclined groove group, located outermost in the rotation direction.

5. The pneumatic tire according to claim 1 or 2, wherein the one-side repeated inclined groove group and the other-side repeated inclined groove group are arranged alternating in the tire circumferential direction.

6. The pneumatic tire according to claim 1 or 2, wherein the plurality of inclined grooves of the repeated inclined groove group include a third inclined groove that is arranged between the first inclined groove and the second inclined groove in the tire circumferential direction and extends alongside the first inclined groove and the second inclined groove, and
the one-side repeated inclined groove group and the other-side repeated inclined groove group are arranged such that the end of the first inclined groove of the one-side repeated inclined groove group, the end of the second inclined groove of the one-side repeated inclined groove group, an end of the third inclined groove of the one-side repeated inclined groove group, and the end of the second inclined groove of the other-side repeated inclined groove group are aligned along a straight line.

7. The pneumatic tire according to claim 6, wherein the third inclined groove terminates without crossing the tire equator.

8. The pneumatic tire according to claim 6, wherein the end of the first inclined groove of the one-side repeated inclined groove group, the end of the second inclined groove of the one-side repeated inclined groove group, the end of the third inclined groove of the one-side repeated inclined groove group, and the end of the second inclined groove of the other-side repeated inclined groove group are aligned along a straight line along the extending direction of the portion of the first inclined groove of the other-side repeated inclined groove group that crosses the tire equator.

9. The pneumatic tire according to claim 1 or 2, wherein the tread pattern includes an auxiliary groove, which has a groove width smaller than each of the inclined grooves of the plurality of inclined grooves of the repeated inclined groove group and is arranged in at least one of between the plurality of inclined grooves of the repeated inclined groove group and between two adjacent repeated inclined groove groups in the tire circumferential direction.

10. The pneumatic tire according to claim 1 or 2, wherein each of the plurality of inclined grooves of the repeated inclined groove group includes a center-side inclined portion that is located on a center side in the tire width direction and an outer-side inclined portion that is located on an outer side in the tire width direction, the center-side inclined portion having an inclination angle with respect to the tire circumferential direction different from that of the outer-side inclined portion, and
the inclination angle of the center-side inclined portion with respect to the tire circumferential direction is smaller than the inclination angle of the outer-side inclined portion with respect to the tire circumferential direction.

11. The pneumatic tire according to claim 10, wherein the inclination angle of the center-side inclined portion with respect to the tire circumferential direction is 30° to 45°, and the inclination angle of the outer-side inclined portion with respect to the tire circumferential direction is greater than 45° and not more than 90°.

12. The pneumatic tire according to claim 1 or 2, wherein the height in the tire radial direction of a land portion defined between the plurality of inclined grooves of the repeated inclined groove group or between two adjacent repeated inclined groove groups in the tire circumferential direction gradually decreases toward an end of the land portion in the tire circumferential direction.
